# EUROPÄISCHE PATENTANMELDUNG

(11) **EP 2 339 512 A1**
(43) Veröffentlichungstag der Anmeldung: **29.06.2011**
(21) Anmeldenummer: 09178181.5
(22) Anmeldetag: 07.12.2009
(51) Int. Cl.: G06Q 10/00

(54) **System für die Lagerung, Verwaltung und den Transport von Laborproben**

(71) Anmelder: GLP systems GmbH, 21079 Hamburg (DE)
(72) Erfinder: Froreich, André von, Dr., 21149 Hamburg (DE)
(74) Vertreter: von Eichel-Streiber, Caspar

(57) **Zusammenfassung**

Für ein System für die Lagerung, Verwaltung und den Transport von in Probengefäßen (P) enthaltenen Laborproben mit mehreren transportablen Probenhaltern (10, 20) zur Aufnahme wenigstens eines Probengefäßes (P) und wenigstens einer ldentifikationsstation zum identifizieren der Probenhalter (10, 20) soll mit der Erfindung eine einfache, zuverlässige und den Ablauf in dem analytischen Labor weitgehend nicht beeinträchtigende Möglichkeit zur Identifikation von auf einem Probenhalter angeordneten Probengefäßen geschaffen werden.

Dazu wird vorgeschlagen, dass die Probenhalter (10, 20) jeweils in einem Codierungsbereich eine Vielzahl von individuell mit Permanentmagneten bestückbaren Magnetaufnahmen (13, 23) in einer für alle Probenhalter (10, 20) gleichen geometrischen Anordnung aufweisen, die für jeden der Probenhalter (10, 20) in unterschiedlicher Weise mit Permanentmagneten bestückt sind und dass in der ldentifikationsstation in einem Auslesebereich, der bei in der Identifikationsstation befindlichem Probenhalter (10, 20) dessen Codierungsbereich gegenüberliegt, Magnetsensoren (31) in einer der geometrischen Anordnung der Magnetaufnahmen (13, 23) entsprechenden geometrischen Anordnung enthalten sind.

## Beschreibung

Die Erfindung betrifft ein System für die Lagerung, Verwaltung und den Transport von in Probengefäßen enthaltenen Laborproben gemäß dem Oberbegriff des Patentanspruchs 1.

In der heutigen Laboranalysetechnik ist es Gang und Gäbe, dass innerhalb kürzester Bearbeitungszyklen eine Vielzahl von Proben analytisch zu untersuchen und abzuarbeiten ist. Dies gilt insbesondere im Bereich medizinischer Laboratorien, wo an eingesandten Proben Blutuntersuchungen, Urinanalysen, zytologische Gewebeuntersuchungen und dgl. durchgeführt werden müssen. Dies gilt aber auch im Bereich anderer Labore, wie z.B. in der Lebensmittelkontrolle. Auch dort müssen mit hoher Taktung Proben aus Produktionsprozessen auf Qualitätsstandards bzw. mögliche Verunreinigungen hin untersucht und analysiert werden.

In der Labortechnik sind insoweit mit der Entwicklung weitgehend automatisierter Mess- und bzw. Analyseapparate zugleich auch Systeme entwickelt worden, welche eine Vereinfachung der erforderlichen Logistik bewirken. Dies betrifft z.B. einen automatisierten Transport von Laborproben zu einzelnen Analysestationen, eine automatisierte Verteilung, eine automatisierte Archivierung und dgl.

Ein wesentlicher Aspekt bei der gesamten Verwaltung und Behandlung einzelner Laborproben ist die eindeutige Zuordnung der Proben während der gesamten Logistik, d.h. die klare Zuordnung bestimmter Mess- und Analyseergebnisse zu den Proben sowie die gezielte Führung der Proben entlang der logistischen Kette im Ablauf der Laboranalyse.

In modernen Laborsystemen werden die in Probengefäßen enthaltenen Proben in der Regel in Probenhaltern- bzw. -trägern angeordnet, in denen sie während der weiteren Verarbeitung und Analyse verbleiben, ggf. an weiteren Verteilstellen auch umgesetzt werden von einem ersten Probenhalter in einen weiteren. Die Probengefäße sind für die erforderliche Nachverfolgbarkeit typischerweise mit einer identifikation versehen, beispielsweise einem darauf angebrachten Barcode. In bestehenden Logistiksystemen für analytische Labore werden für die Nachverfolgung und fortwährende identifikation der Proben auf den Probenhaltern diese Markierungen bzw. ldentifikationscodes auf den Probengefäßen ausgelesen, wozu beispielsweise entsprechende Barcodelesegeräte an entscheidungserheblichen Punkten in dem Logistiksystem angeordnet sein können. Der hiermit verbundene Aufwand ist erheblich, und es kann zu Fehlern kommen. Denn das Probengefäß ist jedenfalls nicht zwangsläufig mit dem Barcode in einer bestimmten Richtung orientiert, so dass das entsprechende Lesegerät ausgebildet sein muss, um über einen großen Winkel Barcodes auslesen zu können. Aber selbst dann kann bei unglücklicher Orientierung des Probengefäßes der Barcode nicht sicher auslesbar sein, so dass es zu Auslesefehlern kommen kann. Schließlich sind entsprechende Lesegeräte platzaufwendig in der Anordnung in dem logistischen System, beispielsweise einer Transportstrecke.

Hier soll mit der Erfindung Abhilfe geschaffen werden, indem eine einfache, zuverlässige und den Ablauf in dem analytischen Labor weitgehend nicht beeinträchtigende Möglichkeit zur identifikation von auf einem Probenhalter angeordneten Probengefäßen angegeben wird.

Diese Aufgabe wird gelöst durch ein System für die Lagerung, Verwaltung und den Transport von in Probengefäßen enthaltenen Laborproben mit den Merkmalen des Patentanspruchs 1. Vorteilhafte Weiterbildungen eines solchen erfindungsgemäßen Systems sind in den abhängigen Ansprüchen 2 bis 9 genannt. Gemäß der Erfindung werden die Probenhalter mit einer individualisierten Identifizierung bzw. Codierung versehen, um diese automatisiert lesbar und eindeutig zuordbar erkennen zu können. Anders als im Stand der Technik wird somit also im Verlaufe der weiteren Behandlung nicht mehr eine an dem Probengefäß angebrachte Markierung zur lndividualisierung der darin befindlichen Laborprobe ausgelesen, sondern es wird auf die Markierung des Probenhalters zurückgegriffen. Dies mag zunächst umständlich erscheinen, da eine weitere Zuordnung der Informationen erforderlich ist. Allerdings birgt das System den erheblichen Vorteil, dass eine Auslesung einer Kennung an dem Probenhalter mit deutlich einfacherem apparativem Aufwand vorgenommen werden kann und zudem erheblich zuverlässiger. Dies liegt darin begründet, dass anders als die nicht vorhersagbare Anordnung des Probengefäßes in Probenhalter und damit die ungenaue Ausrichtung der auf dem Probengefäß angeordneten Kennung der Probenhalter so gefertigt werden kann, dass die daran angeordnete Codierung in einer definierten Anordnung und Lage angebracht ist, die bei einem entsprechend ausgerichteten Lesegerät stets zuverlässig gelesen werden kann.

Der weitere für die Erfindung wesentliche Aspekt liegt in der Art der Codierung, die hier verwendet wird. Für die Codierung der Probenhalter wird eine magnetische Codierung vorgesehen, indem in dem Probenhalter in einer vorgegebenen geometrischen Anordnung (dies kann beispielsweise eine Anordnung entlang eines Kreises, eine matrixartige Anordnung, eine Anordnung entlang einer Linie oder dgl. sein) Magnetaufnahmen ausgebildet werden. Diese Magnetaufnahmen sind im einfachsten Fall Bohrungen bzw. Sacklöcher, in die entsprechende Permanentmagneten eingeführt und darin festgelegt werden können. Diese Magnetaufnahmen sind dabei in Abstimmung zu den verwendeten Permanentmagneten so angeordnet, dass sie einen ausreichenden Abstand zum individuellen Erkennen eines Magneten innerhalb einer Magnetaufnahme bzw. zum Feststellen des Fehlens eines solchen Magneten durch den Magnetaufnahmen gegenüberliegend angeordnete Sensoren belassen. Mit anderen Worten dürfen die Magnetaufnahmen nicht so nah zueinander ausgeführt werden, dass es hier zu Überschneidungen der Magnetfelder zwischen in benachbarten Positionen angeordneten Magneten in der Weise kommt, dass daraus eine Störung der genauen Detektion resultiert. Weitere Bestandteile des Systems sind ferner in ldentifikationsstationen, z.B. in einem Transportsystem in einem Bereich vor einer Weiche, vor einer Analyseapparatur, in einer Verteilstation zum Verteilen von in einem mit mehreren Haltepositionen ausgestatteten Probenhalter angeordneten Probengefäßen oder dgl., angeordnete Magnetsensoren. Diese sind in einem der geometrischen Anordnung der Magnetaufnahmen in den Probenhaltern entsprechenden Muster angeordnet und zwar derart, dass sie bei in der ldentifikationsstation befindlichen Probenhaltern dem Codierungsbereich, in dem die Magnetaufnahmen in dem jeweiligen Probenhalter ausgebildet sind, gegenüberliegen und jeder der Magnetsensoren einer Magnetaufnahmen zugeordnet ist.

Je nach Ausgestaltung der Magnetsensoren können nun zwei oder mehr Zustände erkannt werden: ist der Magnetsensor polsensitiv, so kann er erfassen, ob ein Magnet in der Magnetaufnahme mit dem Nordpol dem Sensor zugewandt, mit dem Südpol dem Sensor zugewandt angeordnet ist oder aber kein Magnet vorhanden. Es ergeben sich hier also pro Magnetaufnahme drei mögliche Zustände, so dass bei einer Anzahl von n Magnetaufnahmen sich insgesamt eine Variationsmöglichkeit von 3ⁿ ergibt, die Codierung unterschiedlich zu gestalten. In der Praxis hat sich hingegen ein einfacheres System bewährt, bei welchem die Magnetaufnahmen mit Magneten bestückt werden, die allesamt in gleicher polarer Ausrichtung, also z.B. mit dem Südpol nach außen weisend, angeordnet sind und Magnetsensoren verwendet werden, die nur in dieser Ausrichtung ein Magnetfeld erkennen, also z.B. auf den Südpol eines Magneten mit einem Signal reagieren. Sind hingegen keine Magneten vorhanden (oder weisen die Magneten mit dem Nordpol nach außen) gibt der Sensor entsprechend kein Signal bzw. ein "Nullsignal" aus. Auf diese Weise ergibt sich ein binäres System, bei welchem jede Magnetaufnahme ein Informationsbit beisteuert. Je nach Anzahl der Magnetaufnahmen ergibt sich die Anzahl der Bits in dem System. Werden z.B. 16 Magnetaufnahmen gewählt, so ergeben sich 16 Bit und damit 65.536 unterschiedliche Codierungsmöglichkeiten (ausgehend von insgesamt leeren Magnetenaufnahmen, ohne jegliche Bestückung bis zur vollen Bestückung mit Magneten).

Das System hat einen weiteren Vorteil, da Magnetfeldsensoren nicht nur sehr zuverlässig, sondern auch sehr schnell arbeiten, so dass eine Erkennung des Probenhalters auch bei bewegtem Probenhalter vorgenommen werden kann. Hierzu sind ggf. entsprechende Triggerelemente vorgesehen, um die Anordnung aus Magnetsensoren im richtigen Zeitpunkt (d.h. der Überdeckung mit den Magnetaufnahmen) zum Erfassen der jeweiligen Magneten auszulösen bzw. zu triggern.

Diese Art der einfachen und zuverlässigen Bestimmung des in erfindungsgemäßer Weise individualisiert codierten Probenträgers ist besonders gut möglich, wenn der Codierungsbereich auf einer im Gebrauch nach unten gewandten Fläche des Probenhalters angeordnet ist (vgl. Anspruch 2).

Insbesondere dann, wenn die Probenhalter in unterschiedlicher Ausrichtung in dem System für die Lagerung, Verwaltung und den Transport von Probengefäßes z.B. in Förderstrecken oder auf Haltepositionen eingesetzt werden können, ist es von Vorteil, wenn die geometrische Anordnung der Magnetaufnahmen rotationssymmetrisch um wenigstens einen Drehwinkel ist. Eine solche um einen Drehwinkel gegebene Rotationssymmetrie (Symmetriewertigkeit 2) erlaubt eine Überdeckung der Magnetaufnahmen mit den entsprechend der Anordnung ausgerichteten Magnetsensoren in zwei unterschiedlichen Drehausrichtungen des Probenhalters und gibt somit eine größere Flexibilität in der Handhabung solcher Probenhalter. Diese Gestattung einer Freiheit im Einsetzen des Probenhalters ergibt bei einer Symmetrie mit der Wertigkeit 2 hinsichtlich der Codierung einen Verlust eines Bits, da zur lndividualisierung eines Probenhalters diesem zwei unterschiedliche Bestückungen der Magnetaufnahmen zugeordnet werden müssen. Bei 16 Magnetaufnahmen stehen somit nur noch 15 Bit, also 32.768 Möglichkeiten, zur Verschlüsselung der Probenhalter zur Verfügung. Wenn die Probenhalter höherwertige Symmetrie aufweisen (z.B. eine Drehsymmetrie um jeweils 90°, also eine Symmetrie mit der Wertigkeit 4), so sind vier verschiedene Ausstattungen der Magnetaufnahmen mit einem einzigen individualisierten Probenhalter verbunden, es tritt ein weiterer Verlust eines Bits auf. Bei 16 Magnetaufnahmen sind mithin dann noch 14 Bit für die Verschlüsselung zur Verfügung, womit 16.384 verschiedene Probenträger individualisiert werden können. Wird hier ein weiteres Bit für interne Zwecke verwendet, so bleiben bei 16 Magnetaufnahmen noch immer 13 Bit für die lndividualisierung von Probenhalter, womit noch immer 8.192 verschiedene Probenhalter individualisiert kenntlich gemacht werden können.

Eine besonders einfache und auch rotationssymmetrisch gestaltbare Anordnung der Magnetaufnahmen ergibt sich, wenn diese matrixartig gebildet ist. Im Falle von 16 Magnetaufnahmen pro Probenhalter kann dies beispielsweise in einer spalten- und zeilenmäßigen Anordnung der Magnetaufnahmen mit vier Spalten und vier Zeilen erfolgen.

Als einfache, robuste, kostengünstige und zuverlässige Magnetsensoren kommen insbesondere Hall-Sensoren in Betracht.

Die Magnetsensoren können mit Vorteil in der ldentifikationsstation auf einer Platine angeordnet sein. Diese Platine trägt dabei zudem Versorgungs- und Datenleitungen für die elektrische Versorgung der und die Kommunikation mit den Magnetsensoren. Eine solche Anordnung der Sensoren auf einer Platine hat den Vorteil, dass die Magnetsensoren in ihrer geometrischen Anordnung sicher fixiert sind und nicht gegeneinander verrücken können. Damit ist das durch die Magnetsensoren gebildete Lesegerät besonders ausfallsicher und zuverlässig.

Schließlich weist das erfindungsgemäße System mit Vorteil eine Steuerung auf, welche mit den Magnetsensoren zusammenwirkt. Die Steuerung ist dabei mit Vorteil mit einem Speicher verbunden, in welchem die Daten der individualisierten Probenhalter gespeichert und in ihrer aktuellen Bestückung mit bestimmten Proben verknüpft sind. Diese Steuerung kann mithin die Anwesenheit einer auf einem bestimmten Probenhalter angeordneten Probe aufgrund des Auslesens des Probenhalters erkennen und z.B. an einer Weiche in einer Transportstrecke die richtige Weichenstellung für den korrekten Weitertransport zu einer nachgelagerten Analysestation oder dgl. bestimmen und auslösen.

Weitere Vorteile und Merkmale der Erfindung ergeben sich aus der nachfolgenden Beschreibung eines Ausführungsbeispiels anhand der beigefügten Figuren. Dabei zeigen:
- Fig. 1: in einer perspektivischen Aufsicht einen ersten Probenhalter eines er- findungsgemäßen Systems für die Lagerung, Verwaltung und den Transport von in Probengefäßen enthaltenen Laborproben gemäß einem Ausführungsbeispiel;
- Fig. 2: eine Ansicht des Probenhalters aus Fig. 1 schräg von unten zur Darstel- lung der Magnetaufnahmen;
- Fig. 3: eine Ansicht von schräg unten eines zweiten Probenhalters des erfin- dungsgemäßen Systems mit den Magnetaufnahmen; und
- Fig. 4: in einer Ansicht schräg von oben eine Platine mit darauf in der rasterar- tigen Anordnung verteilten Magnetfeldsensoren.

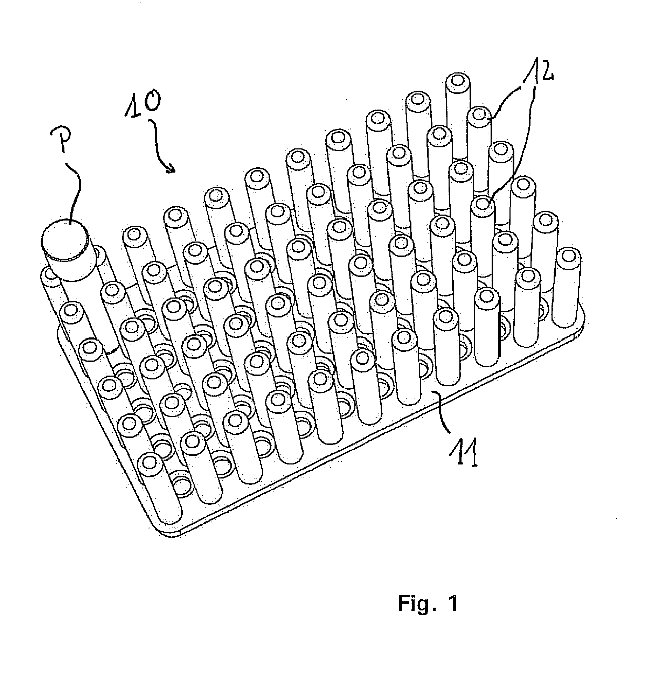

In Fig. 1 ist als Bestandteil eines erfindungsgemäßen Systems ein erster Probenhalter 10 in einer Aufsicht von schräg oben gezeigt. Dieser Probenhalter 10 weist eine Vielzahl von nach oben von einer Grundplatte 11 abstehenden Säulen 12 auf, die jeweils zu viert zwischen sich einen Halteplatz für ein röhrenförmiges Probengefäß P bilden. Insoweit ist dieser Probenhalter 10 wie bekannte und herkömmliche Probenhalter gebildet mit einer Vielzahl von Haltepositionen bzw. Plätzen für Probensysteme. Er dient dem gemeinsamen Transport mehrerer Proben, um diese z.B. nacheinander in einer Analysestation abzuarbeiten oder um diese in einer Verteilstation weiter zu verteilen.

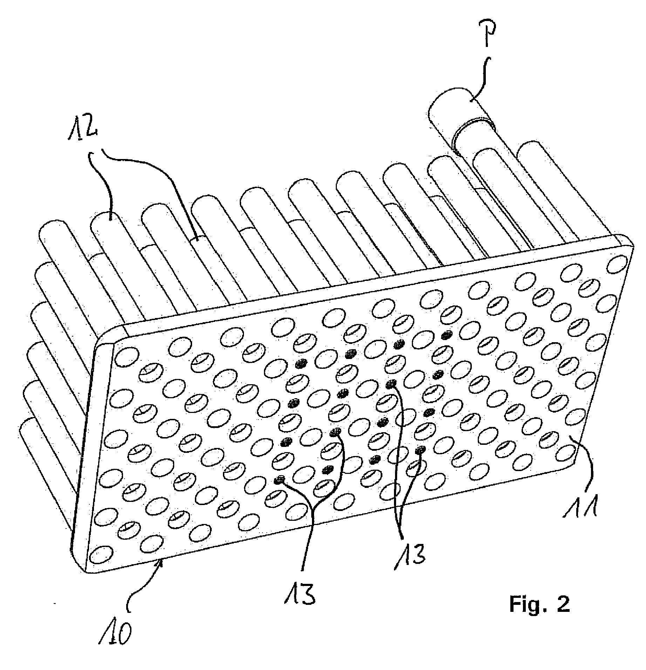

Die erfindungsgemäße Besonderheit des Probenhalters 10 ergibt sich aus der Ansicht in Fig. 2. Dort nämlich ist zu erkennen, wie auf der Unterseite der Grundplatte 11 in einer matrixartigen Anordnung Magnetaufnahmen 13 (insgesamt 16 in einer 4x4 Anordnung) angebracht sind.

Diese Magnetaufnahmen 13 dienen der individualisierten Codierung des Probenträgers 10. Hierzu werden in einzelne, in alle oder auch in gar keine der Magnetaufnahmen Permanentmagnete eingeführt und dort festgelegt. In diesem Ausführungsbeispiel liegen die Permanentmagnete stets mit einem gleichnamigen Pol, insbesondere dem Südpol, der Unterseite des Probenhalters 10 zugewandt.

Durch die unterschiedliche Bestückung der insgesamt 16 Magnetaufnahmen mit einem Magneten ergeben sich insgesamt 2¹⁶, also 65.536 individuelle Möglichkeiten, hier eine Anordnung von Magneten vorzusehen bzw. eben nicht vorzusehen. Dies entspricht einer Codierung von 16 Bit.

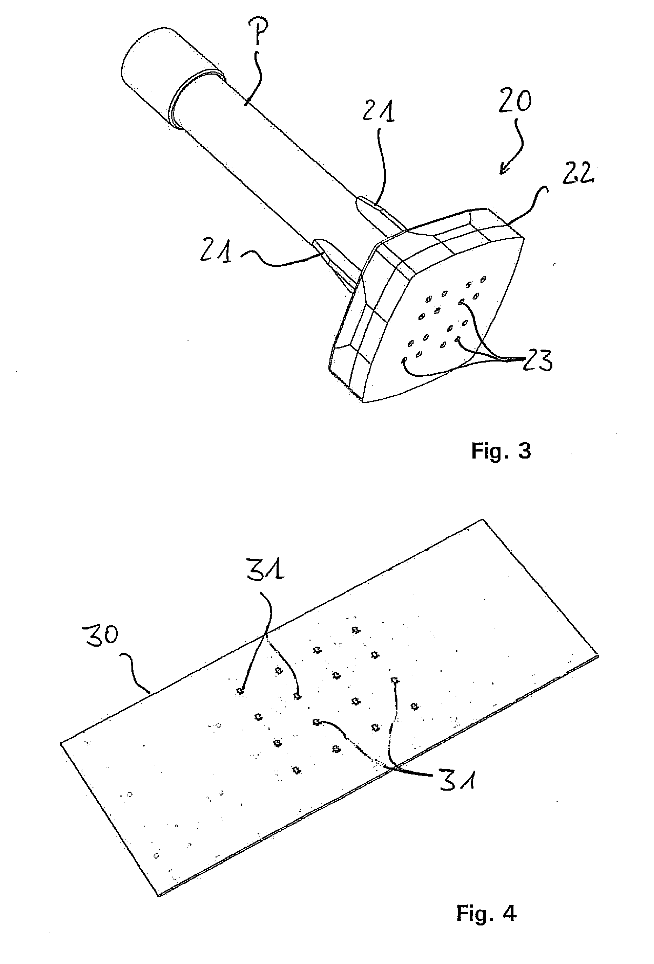

In Fig. 3 ist ein alternativer Probenhalter 20 eines erfindungsgemäßen Systems dargestellt. Die Ansicht der Fig. 3 ist eine dreidimensionale Ansicht schräg von unten. Auf seiner Oberseite weist der Probenhalter 20 insgesamt vier Stützrippen 21 auf, die zwischen sich eine Aufnahme für genau ein röhrchenförmiges Probengefäß P bilden. Der Probenhalter mit einem seiner Grundfläche annähernd quadratisch geformten Sockel 22 ist auf dessen Unterseite in ähnlicher Weise wie auch der Probenhalter 10 mit Magnetaufnahmen 23, auch hier 16 an der Zahl, versehen. Auch diese Magnetaufnahmen 23 können, wie in der oben beschriebenen Weise zur Codierung des Probenträgers 20 mit Permanentmagneten, die dort festgelegt werden können, bestückt werden oder eben freigelassen. Auch hier ist die Bestückung so zu sehen, dass die Permanentmagnete in der Magnetaufnahme in derselben Poligkeit ruhen, mit dem Südpol nach außen zur Unterseite des Sockels 22 weisend.

Weiterer wesentlicher Bestandteil des erfindungsgemäßen Systems ist eine wie in Fig. 4 dargestellte Platine, auf der in einer der matrixartigen Anordnung der Magnetaufnahmen 13 bzw. 23 entsprechenden geometrischen Anordnung Magnetsensoren in Form von Hall-Sensoren 31 festgelegt sind. Diese Hall-Sensoren 31 werden über auf der Platine 30 ebenfalls vorgesehene, hier nicht näher dargestellte Leitungen mit elektrischer Energie versorgt und sind über weitere auf der Platine 30 angeordnete Leitungen zur Daten- bzw. Signalübermittlung angeschlossen.

In dem gemäß Ausführungsbeispiel gezeigten System ist die Platine 30 und sind so die Hall-Sensoren 31 mit einer nicht näher gezeigten Steuerung verbunden, die wiederum mit einem Speicher in Kommunikation steht.

So kann beim Bestücken der Probenhalter mit einem eine Probe enthaltenden Probengefäß P in das System eingelesen werden. Ferner wird in einer ldentifikationsstation, in welcher letzteres eine Platine 30 angeordnet ist zum Erkennen der identifikation des Probenhalters 10,20 der Probenhalter 10,20 ausgelesen und der bekannten Probe zugeordnet. Handelt es sich bei dem Probenhalter um einen solchen mit mehreren Plätzen (Probenhalter 10) so ist ferner dafür Sorge zu tragen, dass der Abstellort bzw. die Halteposition der Probe ebenfalls erfasst und mit gespeichert wird. Auf diese Weise ist der Standort einer bestimmten Probe stets genau einem Probenhalter 10,20 und ggf. einer Abstellposition auf demselben zugeordnet.

Der Probenhalter 10,20 kann nun entlang eines Transportsystems bewegt, in Verteilstellen abgestellt, oder in sonstiger Weise logistisch bearbeitet werden. Immer dann, wenn es auf eine Erkennung der Probe ankommt, ist in einer entsprechenden ldentifikationsstation eine Platine 30 angeordnet, die das Muster der Bestückung der Magnetaufnahmen 13 bzw. 23 mit den Hall-Sensoren 31 ausliest und so die identifikation des Probenhalters 10 bzw. 20 erkennt. Die Steuerung kann nun über die diesem Probenhalter 10,20 zugeordnete, gespeicherte Probe die Letztere identifizieren und über die weitere Abarbeitung dieser Probe entscheiden, entsprechend Weichen stellen, Analysegeräte einstellen und dgl.

Wie zu erkennen ist, ist der Probenhalter 10 mit einer Rotationssymmetrie der Wertigkeit 2 versehen, der Probenhalter 20 mit einer Rotationssymmetrie der Wertigkeit 4. D.h., der Probenhalter 10 kann um 180° gedreht aufgestellt werden, der Probenhalter 20 sogar jeweils um 90° verdreht. Daraus ergibt sich, dass einem mit der vierwertigen Symmetrie ausgestatteten Probenhalter insgesamt vier unterschiedliche Bestückungsmöglichkeiten der Magnetaufnahmen 23 zugeordnet sind, die Möglichkeit der lndividualisierung entsprechend reduziert ist. Daraus ergibt sich aber auch ein höherer Freiheitsgrad in der Bedienung des erfindungsgemäßen Systems. Bei einem mit mehreren Proben zu bestückenden, in Fig. 1 dargestellten Probenhalter 10 mit einer zweiwertigen Symmetrie kann über die Auslesung einer entsprechenden Bestückung der Magnetaufnahmen 23 zugleich eine Information über seine tatsächliche Orientierung erhalten werden, so dass die Stellplätze bzw. Haltepositionen der einzelnen Probengefäße P nach wie vor nachgehalten und entsprechend der tatsächlichen Ausrichtung des Probenhalters 10 erfasst werden können.

Das erfindungsgemäße System gestattet eine schnelle, einfache und robuste identifikation und lndividualisierung der Probenhalter und damit bei entsprechender Zuordnung in einem System das Erkennen der auf den Probenhaltern aktuell angeordneten Proben. Dies kann auch in der Bewegung geschehen, z.B. beim Transport eines Probenhalters entlang einer Bahn und erleichtert damit den weitgehend automatisierten Betrieb eines Analyselabors.

### Bezugszeichenliste

- 10: Probenhalter
- 11: Grundplatte
- 12: Säule
- 13: Magnetaufnahme
- 20: Probenhalter
- 21: Stützrippe
- 22: Sockel
- 23: Magnetaufnahme
- P: Probengefäß

## Patentansprüche

1. System für die Lagerung, Verwaltung und den Transport von in Probengefäßen (P) enthaltenen Laborproben mit mehreren transportablen Probenhaltern (10, 20) zur Aufnahme wenigstens eines Probengefäßes (P) und wenigstens einer ldentifikationsstation zum Identifizieren der Probenhalter (10, 20), **dadurch gekennzeichnet, dass** die Probenhalter (10, 20) jeweils in einem Codierungsbereich eine Vielzahl von individuell mit Permanentmagneten bestückbaren Magnetaufnahmen (13, 23) in einer für alle Probenhalter (10, 20) gleichen geometrischen Anordnung aufweisen, die für jeden der Probenhalter (10, 20) in unterschiedlicher Weise mit Permanentmagneten bestückt sind und dass in der ldentifikationsstation in einem Auslesebereich, der bei in der ldentifikationsstation befindlichem Probenhalter (10, 20) dessen Codierungsbereich gegenüberliegt, Magnetsensoren (31) in einer der geometrischen Anordnung der Magnetaufnahmen (13, 23) entsprechenden geometrischen Anordnung enthalten sind.

2. System nach Anspruch 1, **dadurch gekennzeichnet, dass** der Codierungsbereich auf einer im Gebrauch nach unten gewandten Fläche der Probenhalter (10, 20) angeordnet sind.

3. System nach einem der vorhergehenden Ansprüche, **dadurch gekennzeichnet, dass** die geometrische Anordnung der Magnetaufnahmen (13, 23) rotationssymmetrisch um wenigstens einen Drehwinkel ist.

4. System nach einem der vorhergehenden Ansprüche, **dadurch gekennzeichnet, dass** die geometrische Anordnung der Magnetaufnahmen (13, 23) matrixartig gebildet ist.

5. System nach einem der vorhergehenden Ansprüche, **dadurch gekennzeichnet, dass** die Magnetaufnahmen (13, 23) jeweils entweder mit einem Magneten bestückt oder unbestückt sind und dass alle Magneten in gleicher Polausrichtung, also mit dem gleichen Pol nach außen, in den Magnetaufnahmen (13, 23) angeordnet sind.

6. System nach einem der Ansprüche 1 bis 4, **dadurch gekennzeichnet, dass** die Magnetsensoren (31) polsensitiv und die Magnetaufnahmen (13, 23) jeweils mit einem mit seinem Nordpol nach außen weisenden Magneten oder mit einem mit seinem Südpol nach außen weisenden Magneten bestückt oder unbestückt sind.

7. System nach einem der vorhergehenden Ansprüche, **gekennzeichnet durch** 16 Magnetaufnahmen (13, 23) pro Probenhalter (10, 20).

8. System nach einem der vorhergehenden Ansprüche, **gekennzeichnet durch** Hall-Sensoren als Magnetsensoren (31).

9. System nach einem der vorhergehenden Ansprüche, **dadurch gekennzeichnet, dass** die Magnetsensoren (31) auf einer in der ldentifikationsstation angeordneten Platine (30) angebracht sind, die zudem Versorgungs- und Datenleitungen für die elektrische Versorgung der und die Kommunikation mit den Magnetsensoren (31) trägt.

10. System nach einem der vorhergehenden Ansprüche, **gekennzeichnet durch** eine Steuerung zum Zusammenwirken mit den Magnetsensoren (31), wobei die Steuerung mit dem Speicher verbunden ist, zur Speicherung der Zuordnung der einzelnen Proben in den Probengefäßen (P) einem bestimmten Probenhalter (10, 20), ggf. auch zu einer bestimmten Halteposition auf dem Probenhalter (10, 20).
